# EUROPEAN PATENT APPLICATION

(11) **EP 4 797 384 A1**
(43) Date of publication of application: **26.08.2026**
(21) Application number: 26158530.1
(22) Date of filing: 13.02.2026
(51) Int. Cl.: H01M 10/613, H01M 10/625, H01M 10/653, H01M 10/6556, H01M 10/6567, H01M 10/658, H01M 50/204, H01M 50/211, H01M 50/271, H01M 50/293, H01M 50/505

(54) **BATTERY MODULE**

(30) Priority: 21.02.2025 KR 20250022927
(71) Applicant: SK On Co., Ltd., Seoul 03161 (KR)
(72) Inventor: HWANG, Dae Gyun, 34124 Daejeon (KR); KIM, Jeong Won, 34124 Daejeon (KR); AN, Hyo Seong, 34124 Daejeon (KR); CHOI, Hoe Wook, 34124 Daejeon (KR)
(74) Representative: Prüfer & Partner mbB Patentanwälte · Rechtsanwälte

(57) **Abstract**

The present disclosure relates to a battery module. The battery module may include: a housing having an interior space formed therein, and including an inlet through which refrigerant is introduced and an outlet through which refrigerant is discharged; a battery assembly accommodated in the housing; a busbar accommodated in the housing and electrically connected with electrode tabs of the battery assembly; and a busbar frame accommodated in the housing and having a surface on which the busbar is mounted.

## Description

### BACKGROUND OF THE INVENTION

### 1. Field

The present disclosure relates to a battery module capable of improving quality of a secondary battery module.

### 2. Description of the Related Art

The demand for eco-friendly alternative energy sources is becoming an indispensable factor for future life as the price of energy sources is increasing due to the depletion of fossil fuels and environmental pollution is becoming a growing concern, and particularly the demand for secondary batteries as an energy source is soaring rapidly due to the technology development and the increasing demand for mobile devices.

For example, in the case that secondary batteries are mainly employed in devices such as mobile devices, even if one or two to four cells are used, it is not difficult to achieve the storage capacity and energy output level required for each device, but medium-to-large-sized devices such as automobiles require high power and large storage capacity to cause great concern in terms of energy storage capacity and energy output in the case that a small number of cells are used as above.

Therefore, it is common for medium-to-large-sized devices to be equipped with a battery module having a plurality of cells electrically connected thereto, or a battery pack including a plurality of such battery modules.

For example, the battery module may include a battery assembly having a plurality of cells stacked, a module frame for protecting the battery assembly from external shock, heat, or vibration, and an end plate covering front and/or rear surfaces of the battery assembly.

For example, the battery module may have a closed structure through coupling of the module frame and the end plate, but the end plate may have an opening formed to connect an inner member and an outer member of the battery module.

Meanwhile, within the battery module, the internal pressure of the cells may increase due to overcharging or the like, and high-temperature heat, gas, or flame may be released to the outside of the cells, resulting in a thermal propagation between the cells, and successive ignition between the cells.

Since these thermal propagation and ignition reduce durability and safety of the battery module, it is necessary to develop a battery module capable of preventing thermal propagation and ignition inside the battery module.

### SUMMARY OF THE INVENTION

According to one aspect of the present disclosure, an object of the present disclosure is to provide a battery module capable of suppressing thermal propagation in a secondary battery.

According to another aspect of the present disclosure, an object of the present disclosure is to provide a battery module capable of preventing ignition in a secondary battery.

According to another aspect of the present disclosure, an object of the present disclosure is to provide a battery module having a structure capable of improving a process efficiency in a process of manufacturing a secondary battery.

The secondary battery module according to the present disclosure may be widely applied in the fields of electric vehicles, battery charging stations, energy storage systems (ESS), and other green technologies such as photovoltaics and wind power utilizing battery cells.

Furthermore, the secondary battery module according to the present disclosure may be used in eco-friendly mobility, including electric vehicles and hybrid vehicles to prevent climate change by curbing air pollution and greenhouse fluid emissions.

The present disclosure provides a battery module which may include: a housing having an interior space formed therein, and including an inlet through which refrigerant is introduced and an outlet through which refrigerant is discharged; a battery assembly accommodated in the housing; a busbar accommodated in the housing and electrically connected with electrode tabs of the battery assembly; and a busbar frame accommodated in the housing and having a surface on which the busbar is mounted.

In an embodiment of the present disclosure, the housing of the present disclosure may have a shape with an open top region and further includes a top cover coupled to the housing and configured to cover the top region.

In an embodiment of the present disclosure, a sealing member may be located between the housing and the top cover.

In an embodiment, the battery assembly of the present disclosure may include a plurality of first stacks, each including a first cell and a thermal barrier member stacked to the first cell in a first direction; a plurality of second stacks, each including a second cell and a heat transfer member stacked to the second cell in the first direction; and electrode tabs of the plurality of first cells and electrode tabs of the plurality of second cells electrically connected to the busbar.

In an embodiment of the present disclosure, the plurality of first stacks and the plurality of second stacks of the present disclosure may be arranged in sequence, with each first stack and each second stack alternating with each other.

In an embodiment of the present disclosure, the thermal barrier member of the present disclosure may include any one of a fireproof foam pad, a metal foam pad, and a ceramic wool pad as a thermal barrier pad.

In an embodiment of the present disclosure, the heat transfer member of the present disclosure may be a cooling plate, each having refrigerant flowing therein and including a plurality of channels extending in a longitudinal direction of the second cell.

In an embodiment of the present disclosure, each of the plurality of channels of the present disclosure may be open at both ends of the cooling plate.

In an embodiment of the present disclosure, the busbar frame of the present disclosure may include at least one through-hole through which the electrode tab of the first cell and the electrode tab of the second cell may pass to be connected to the busbar.

In an embodiment of the present disclosure, the busbar frame of the present disclosure may include a refrigerant flow hole through which refrigerant flows toward the battery assembly.

In an embodiment of the present disclosure, the busbar frame of the present disclosure may further include a plurality of guides extending from the refrigerant flow hole toward the battery assembly and converging toward the battery assembly.

In an embodiment of the present disclosure, ends of the plurality of guides may form a guide hole.

In an embodiment of the present disclosure, a thickness of a cooling plate of the present disclosure may be less than a width of the guide hole, and an end of the cooling plate may be inserted into the guide hole.

In an embodiment of the present disclosure, the refrigerant of the present disclosure may flow into a plurality of channels from the guide hole.

In an embodiment of the present disclosure, the battery module of the present disclosure may further include: an accommodating space formed by each of the first stack and the second stack, the electrode tab of each first cell and the electrode tab of each second cell, and the busbar frame; and a filler inserted into the accommodating space.

According to an embodiment of the present disclosure, the thermal propagation in a secondary battery may be suppressed.

According to another embodiment of the present disclosure, the ignition of a secondary battery may be prevented.

According to another embodiment of the present disclosure, a process efficiency in a manufacturing process of a secondary battery may be improved.

### BRIEF DESCRIPTION OF THE DRAWINGS

Fig. 1 is an exploded perspective view schematically illustrating a battery module according to an embodiment of the present disclosure.
Figs. 2A and 2B are perspective views schematically illustrating the coupling of a housing and a top cover, according to one embodiment of the present disclosure.
Fig. 3 is an exploded perspective view schematically illustrating a battery assembly according to one embodiment of the present disclosure.
Fig. 4 is a schematic diagram schematically illustrating a heat transfer member according to one embodiment of the present disclosure.
Fig. 5 is a perspective view schematically illustrating the coupling of a busbar frame and a busbar to a battery assembly according to one embodiment of the present disclosure.
Fig. 6A is a schematic diagram schematically illustrating a front surface of a busbar and a busbar frame according to one embodiment of the present disclosure, and Fig. 6B is an enlarged view of portion A of Fig. 6A.
Fig. 7 is a perspective view schematically illustrating a rear surface of a busbar frame according to one embodiment of the present disclosure.
Fig. 8A is a perspective view schematically illustrating a state in which a battery assembly and a busbar frame are coupled, according to one embodiment of the present disclosure, and Fig. 8B is an enlarged view of a portion of Fig. 8A.
Fig. 9A is a schematic diagram schematically illustrating a state in which a battery assembly and a busbar frame are coupled according to one embodiment of the present disclosure, and Fig. 9B is an enlarged view of portion C of Fig. 9A.
Fig. 10 is a schematic diagram schematically illustrating the movement of refrigerant and heat transfer in a battery module according to one embodiment of the present disclosure.

### DETAILED DESCRIPTION

Hereinafter, embodiments of the present disclosure will be described in detail with reference to the accompanying drawings to facilitate practice by those of ordinary skill in the art to which the present disclosure pertains. However, the present disclosure may be implemented in various other forms and is not limited to the embodiments set forth herein. In order to clearly illustrate the present disclosure in the drawings, parts irrelevant to the description have been omitted, and like reference numerals throughout the specification refer to like elements.

As used herein, the term "secondary battery" refers to a battery cell or a cell, which may have an electrode assembly structure of cathode plate/separator/anode plate stacked to a laminate sheet exterior member, embedded in connection with the electrodes formed on the exterior of the electrode assembly. Furthermore, the electrode may be drawn outwardly from the sheet but extend in the same or opposite direction to each other.

Further, as used herein, a secondary battery includes a rechargeable battery, a battery cell, a cell, or a battery.

Furthermore, the secondary battery in the present disclosure may include cylindrical, prismatic, or pouch batteries, depending on the type of exterior materials.

Furthermore, as used herein, a battery assembly is a collective term for battery modules or battery packs. Thus, the battery assembly according to one embodiment of the present disclosure may refer to a battery module as well as a battery pack that houses a cell without a battery module, such as a cell to pack (hereinafter, referred to as CTP).

Furthermore, as used herein, a cell refers to a lithium secondary battery, more specifically, the basic unit of a lithium-ion battery, which may be used by charging and discharging electrical energy. For example, the primary components of a cell are a cathode electrode, an anode electrode, a separator, and an electrolyte, which are prepared by being enclosed in a case (or pouch). In addition, the cell may further include tabs each connected to the cathode electrode and anode electrode for electrical connection with an external source, and protruding to the outside of the pouch.

Further, as used herein, the battery module may refer to a battery assembly including one or more of the aforementioned cells which are bundled to be enclosed in a case to protect them from external shock, heat, vibration, and the like. The one or more cells may supply or receive power to or from an external source via a busbar assembly including a busbar and a busbar frame electrically coupled thereto.

Further, the battery pack may refer to a set of a predetermined number of battery modules electrically connected together for a desired voltage or power.

With reference to the following drawings, battery modules 1 according to various embodiments of the present disclosure will be described in more detail.

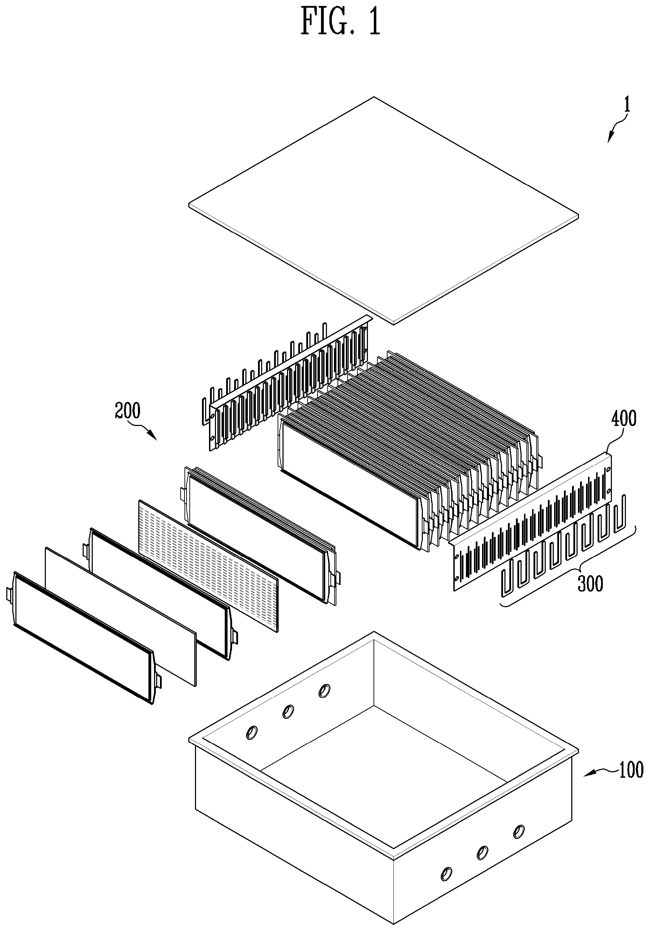

Fig. 1 is an exploded perspective view schematically illustrating the battery module 1 according to one embodiment of the present disclosure.

In one embodiment of the present disclosure, the battery module 1 may include: a housing 100 having an interior space 110 formed therein, and including an inlet 120 through which refrigerant is introduced and an outlet 130 through which refrigerant is discharged; a battery assembly 200 accommodated in the housing 100; a busbar 300 accommodated in the housing 100 and electrically connected with electrode tabs of the battery assembly 200; and a busbar frame 400 accommodated in the housing 100 and having a surface on which the busbar 300 is mounted.

As shown in Fig. 1, the battery module 1 may include the battery assembly 200 having a plurality of cells assembled therein and a busbar assembly electrically connecting the same. Further, the busbar assembly may include the busbar 300 electrically coupled to electrode tabs of the battery assembly 200 and the busbar frame 400 on which the busbar 300 is mounted.

For example, the plurality of cells may be assembled in a state of being stacked on each other and may be electrically integrally connected by the busbar assembly. The busbar assembly may be electrically connected to the outside, to store or charge electrical energy in the battery assembly 200, or to supply or discharge electrical energy stored in the battery assembly 200 to the external source.

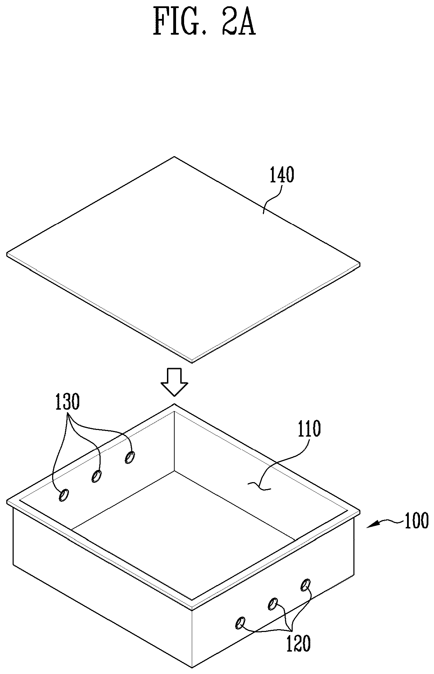

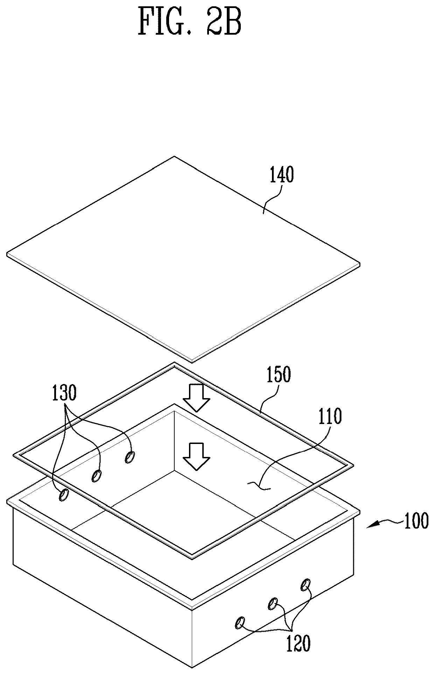

Figs. 2A and 2B are perspective views schematically illustrating the coupling of the housing 100 and a top cover 140, according to one embodiment of the present disclosure.

In one embodiment of the present disclosure, the housing 100 may have a shape with an open top region, and further include a top cover 140 coupled to the housing 100 and configured to cover the top region.

As shown in Fig. 2A, the housing 100 in which the battery assembly 200 is housed may have an interior space 110 formed therein, and the interior space 110 may be filled with refrigerant.

In one embodiment of the present disclosure, to implement effective cooling of the battery assembly 200, a liquid-immersion cooling method may be employed, in which a refrigerant, which is a cooling fluid having electrical insulating properties, is supplied into the battery module 1 and the battery assembly 200 is brought into direct contact with the refrigerant. Thus, by directly cooling the battery assembly 200 with refrigerant with superior thermal conductivity than a gas, it is possible to cool the battery module 1 more effectively and prevent fire.

As shown in Fig. 2A, the housing 100 may have an inlet 120 through which refrigerant is introduced and an outlet 130 through which refrigerant is discharged. The refrigerant inlet 120 may be penetratively coupled to the housing 100 to serve as a passage of fluid for supplying the refrigerant supplied through an inlet pipe (not shown) from the outside of the housing 100 to the inside. The refrigerant outlet 130 may be penetratively coupled to the housing 100 to serve as a passage of fluid for discharging the refrigerant from the interior of the housing 100 to the outside of the housing 100 through an outlet pipe (not shown) during normal operation of the battery module 1.

Thus, as refrigerant inflow from the inlet 120 of the housing 100 and refrigerant outflow to the outlet 130 of the housing 100 are performed, refrigerant may circulate in the interior space 110 of the housing 100. Thus, the temperature gradient of the refrigerant inside the housing 100 may be made smaller, which allows for more uniform cooling of the entire battery assembly 200.

On the other hand, the battery module 1 may generate heat in the process of storing energy, and the temperature of the refrigerant may increase by heat transfer. Furthermore, the volume of the refrigerant may increase or evaporation may occur. Therefore, a temperature sensor (not shown) may be installed inside the housing 100, which may be used to measure the temperature of the refrigerant stored inside the housing 100. Additionally, a pressure sensor (not shown) may be installed to measure a change in pressure inside the housing 100. For example, if an air layer is formed on top of the interior of the housing 100, the pressure sensor may measure pressure changes in the air layer. Also, in the case that the housing 100 is completely filled with refrigerant, the pressure sensor may measure the change in pressure of the refrigerant upon temperature change of the refrigerant.

Further, a separate circulation pump (not shown) may be installed in the path of the inlet and outlet pipes, which are not shown, to facilitate the inflow and outflow of refrigerant through the inlet and outlet pipes.

For example, the refrigerant may be in direct contact with the cell to cool the cell, thereby preventing the cell from thermal runaway and fire thereby. For example, the refrigerant, which is a fluid with good insulating properties and thermal conductivity, may include hydro fluoro ether, fluoro ketone, perfluorinated compounds, or a combination thereof. The type of refrigerant is not limited thereto, and any solution having insulating properties and high thermal conductivity will suffice.

As shown in Fig. 2A, the top cover 140 may serve as a cover for the housing 100 having an open shape with an open top region. Thus, it acts as a protective plate to prevent refrigerant from overflowing to the outside of the housing 100. Such top cover 140 may have a flat plate shape, but is not limited thereto, and the top cover 140 may have various different shapes.

In one embodiment of the present disclosure, a sealing member 150 may be located between the housing 100 and the top cover 140.

As shown in Fig. 2B, the battery module 1 may include a sealing member 150 located between the housing 100 and the top cover 140. For example, the sealing member 150 may utilize a rubber packing. Thus, when the housing 100 and the top cover 140 are coupled, the housing 100 may be sealed to prevent leakage of the refrigerant filled in the interior space 110.

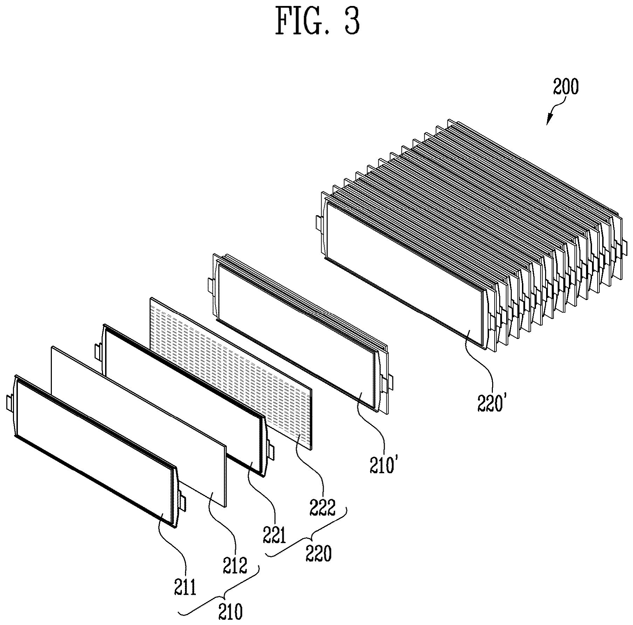

Fig. 3 is an exploded perspective view schematically illustrating a battery assembly 200 according to one embodiment of the present disclosure.

In one embodiment of the present disclosure, the battery assembly 200 may include: a plurality of first stacks 210, each including a first cell 211 and a thermal barrier member 212 stacked on the first cell 211 in a first direction; a plurality of second stacks 220, each including a second cell 221 and a heat transfer member 222 stacked on the second cell 221 in the first direction; and electrode tabs 211a of the plurality of first cells 211 and electrode tabs 221a of the plurality of second cells 221 to be electrically connected to the busbar 300.

Further, in one embodiment of the present disclosure, the plurality of first stacks 210 and the plurality of second stacks 220 may be located in sequence, with each of the first stacks 210 and each of the second stacks 220 alternating with each other.

As shown in Fig. 3, the plurality of first stacks 210 and the plurality of second stacks 220 may be arranged in sequence while alternating with each other; first stack 210 - second stack 220 - first stack 210' - second stack 220' may be arranged in sequence.

As shown in Fig. 3, the thermal barrier member 212 may have the shape of a pad or sheet, for example, and may include one or more materials of fireproof foam, metal foam, ceramic wool, silica, or mica. In addition, for example, the thermal barrier member 212 may be formed of a flame-retardant, non-combustible, or fire-resistant insulating materials, as it is necessary to block the propagation of flame.

In addition, for example, the thermal barrier member 212 may be formed of a material including ceramics and capable of providing fire resistance and thermal insulation, a material in a form of a sheet or pad coated with or made of a gel-type insulator including one or more of sodium silicate, mica, silica aerogel on a thin film, or a fibrous fire-resistant thermal insulator such as ceramic wool or glass fiber having flame retardancy.

For example, the thermal barrier member 212 may include a material that allows gases to pass through but blocks flames. In this case, when the first cell 211 or the second cell 221 in the battery module 1 explodes, only gases among the explosion byproducts may pass through the thermal barrier member 212, and the flow of flames, foreign substances or the like may be blocked by the thermal barrier member 212.

Thus, the transfer of flame or foreign substances to the neighboring first cell 211 or second cell 221 may be blocked.

For example, the thermal barrier member 212 may form a thermal insulation layer by rapidly expanding graphite when exposed to heat, by forming a barrier member (not shown) with a rubber material including ceramic having thermal barrier performance, or forming with a rubber material containing expandable graphite.

Further, since the second stack 220 is located on top of the first stack 210, sandwich shape is formed by having the thermal barrier member 212 between the first cell 211 and the second cell 221. Thus, as described above, when the thermal propagation occurs in any of the plurality of first cells 211 or the plurality of second cells 221, the heat transfer to the neighboring second cell 221 or the first cell 211 may be delayed.

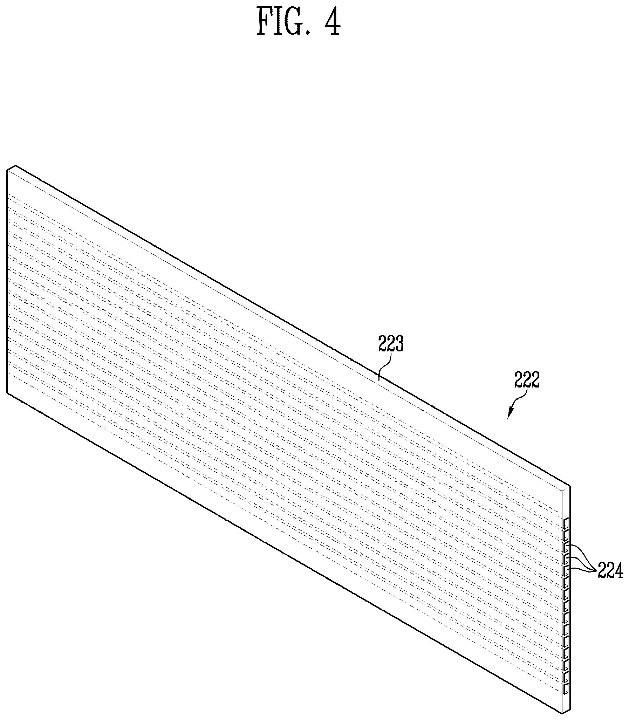

Fig. 4 is a schematic diagram schematically illustrating a heat transfer member 222 according to one embodiment of the present disclosure.

In one embodiment of the present disclosure, the heat transfer member 222 of the present disclosure may include a plurality of channels 224, each having refrigerant flowing therein and extending in a longitudinal direction of the second cell 221. Further, each of the plurality of channels 224 may be open at both ends of a cooling plate 223.

As shown in Fig. 4, for example, the heat transfer member 222 is a cooling plate 223, and a plurality of channels 224 may be installed in the cooling plate 223. The plurality of channels 224 may be open at both ends of the cooling plate 223, allowing refrigerant to flow inside each of the plurality of channels 224.

As shown in Fig. 3, the heat transfer member 222 is stacked on the second cell 221, but as described above, since the plurality of first stacks 210 and the plurality of second stacks 220 are arranged in sequence while alternating with each other, the heat transfer member 222 may also be formed in a sandwich-like structure with the heat transfer member 222 interposed between the first cell 211 and the second cell 221.

For example, the refrigerant flowing through the plurality of channels 224 may take away heat generated in the first cell 211 or the second cell 221, thereby realizing cooling of the first cell 211 or the second cell 221.

Furthermore, in the event of thermal propagation, the thermal propagation may be delayed by the thermal barrier member 212 as described above, while allowing the refrigerant to flow through the plurality of channels 224 during the delayed time, thereby releasing the heat from the first cell 211 or the second cell 221 to the refrigerant.

For example, the heat transfer member 222 may be face-to-face bonded to the first cell 211 or the second cell 221 via a thermally conductive adhesive (not shown). Thus, the bonding area between the heat transfer member 222 and the first cell 211 or the second cell 221 may be large, and heat transfer between the heat transfer member 222 and the first cell 211 or the second cell 221 may be facilitated.

For example, the thermally conductive adhesive may have excellent heat resistance performance, aging resistance, and electrical insulation performance, and may have moisture resistance, seismic resistance, leakage resistance, and chemical-resistant medium properties. Therefore, the heat dissipation effect may be improved, and the viscous properties of the thermally conductive adhesive may be utilized to further strengthen the bonding of the heat transfer member 222 with the first cell 211 or the second cell 221.

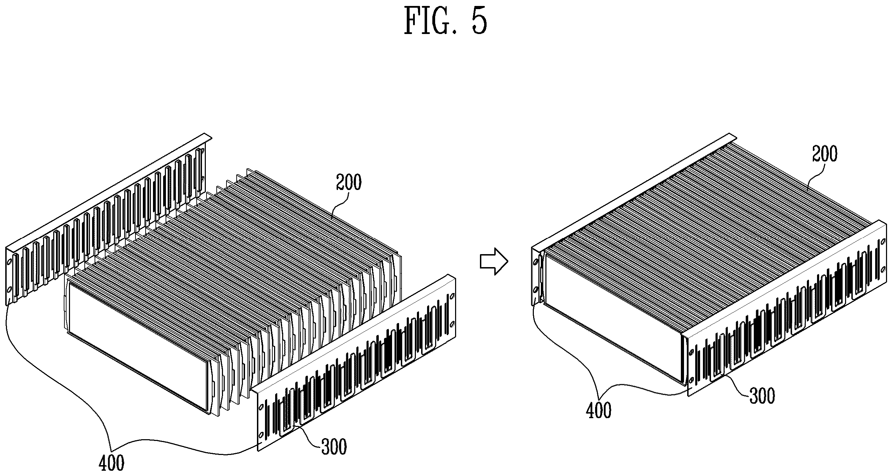

Fig. 5 is a perspective view schematically illustrating a state in which a busbar frame 400 and a busbar 300 are coupled to a battery assembly 200 according to one embodiment of the present disclosure.

In one embodiment of the present disclosure, the battery assembly 200 may be electrically connected to the busbar assembly, which may include a busbar 300 and a busbar frame 400 supporting the busbar 300.

As shown in Fig. 5, the busbar frame 400 may extend along a direction in which the plurality of first cells 211 or the plurality of second cells 221 are stacked with the battery assembly 200 interposed therebetween.

For example, the busbar assembly is illustrated using a case where the electrode tabs of each of the plurality of first cells 211 or the plurality of second cells 221 are located on opposite direction of the battery assembly 200. For example, in the case that the electrode tabs are located on one side of the battery assembly 200 to face the same direction, the busbar assembly may be located on one side of the battery assembly 200, for example on a top of the battery assembly 200, to be electrically connected with the electrode tabs of the cells.

For example, the busbar 300 may be formed of metal with excellent electrical conductivity, and the busbar frame 400 may be formed of an insulating material.

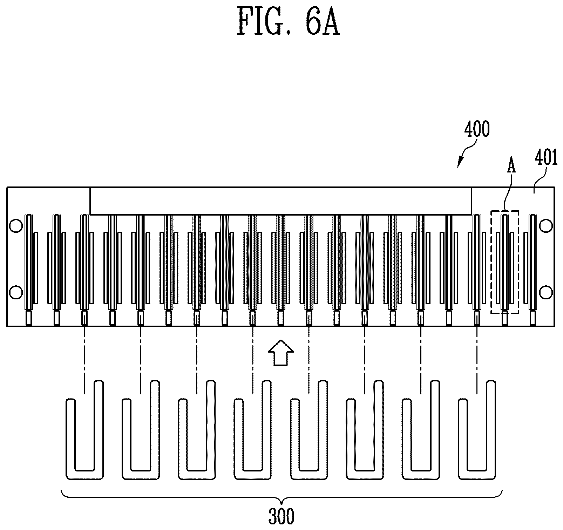

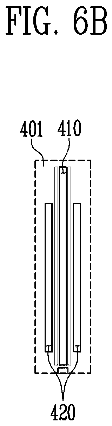

Fig. 6A is a schematic diagram schematically illustrating a front surface 401 of a busbar 300 and a busbar frame 400 according to one embodiment of the present disclosure, and Fig. 6B is an enlarged view of portion A of Fig. 6A.

In one embodiment of the present disclosure, the busbar frame 400 may include at least one through-hole 420 through which each electrode tab 211a of the plurality of first cells 211 and each electrode tab 221a of the plurality of second cells 221 may pass to be connected with the busbar 300.

As shown in Fig. 6A, the busbar 300 may be supported by being coupled to a front surface 401 of the busbar frame 400. Additionally, each electrode tab 211a of the plurality of first cells 211 and each electrode tab 221a of the plurality of second cells 221 may be inserted into through-holes 420 formed in the busbar frame 400 to be electrically connected with the busbar 300.

In one embodiment of the present disclosure, the busbar frame 400 may include a refrigerant flow hole 410 through which refrigerant flows toward the battery assembly 200.

As shown in Fig. 6B, the refrigerant flow hole 410 may be formed in the form of slits between through-holes 420 into which each electrode tab 211a of the plurality of first cells 211 and each electrode tab 221a of the plurality of second cells 221 are inserted. Refrigerant may flow through the refrigerant flow holes 410 from the outside of the busbar assembly toward the battery assembly 200, or from the battery assembly 200 toward the busbar assembly.

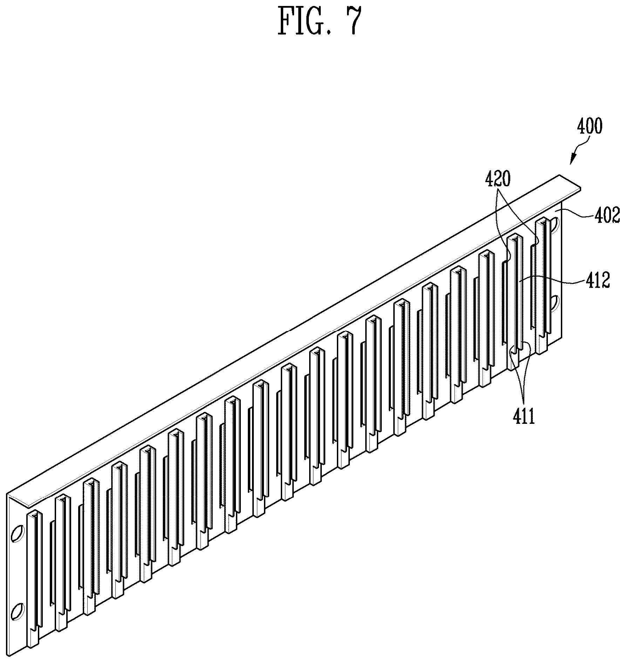

Fig. 7 is a perspective view schematically illustrating a rear surface 402 of a busbar frame 400, according to one embodiment of the present disclosure.

In one embodiment of the present disclosure, the busbar frame 400 of the present disclosure may further include a plurality of guides 411 extending from the refrigerant flow hole 410 toward the battery assembly 200 and converging toward the battery assembly 200, and the ends of the plurality of guides 411 may form a slit-like guide hole 412.

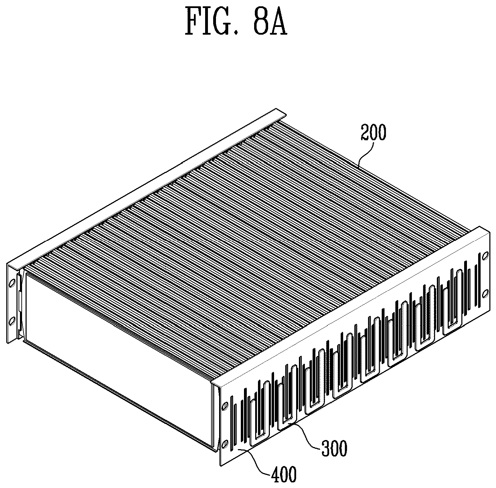

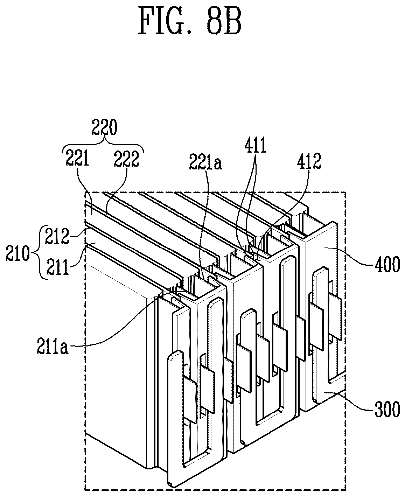

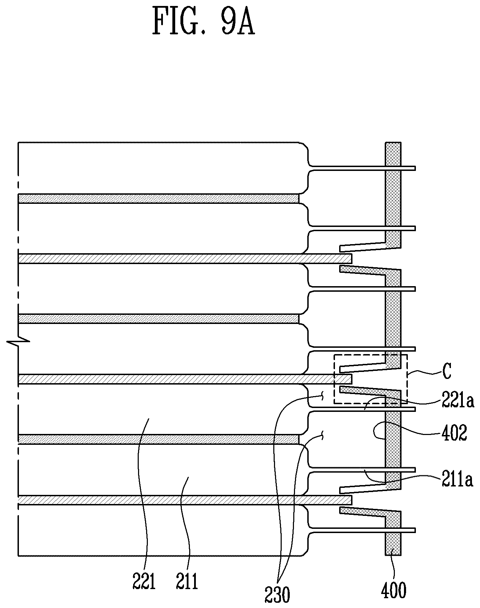

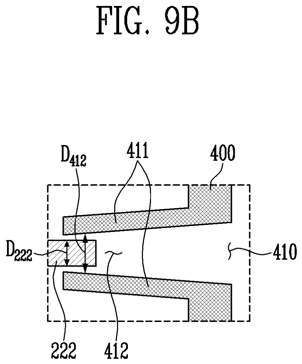

As shown in Fig. 7, a rear surface 402 of the busbar frame 400 may be provided with guides 411 extending toward the battery assembly 200 from the boundaries of the both sides forming the respective refrigerant flow holes 410. Further, the plurality of guides 411 may extend to form a slit-like guide hole 412 at their ends. For example, the guide holes may become a part of the refrigerant flow hole 410 described above, and specific aspects of the guide holes will be further described with reference to Figs. 8A, 8B, 9A, and 9B, which will be described later.

Fig. 8A is a perspective view schematically illustrating a state in which a battery assembly 200 and a busbar frame 400 are coupled, in accordance with one embodiment of the present disclosure, and Fig. 8B is an enlarged view of a portion of Fig. 8A.

Further, Fig. 9A is a perspective view schematically illustrating a state in which a battery assembly 200 and a busbar frame 400 are coupled, according to one embodiment of the present disclosure, and Fig. 9B is an enlarged view of portion C of Fig. 9A.

In one embodiment of the present disclosure, a thickness D222 of the cooling plate is less than a width D412 of the guide hole 412, and a first end of the cooling plate 223 may be inserted into the guide hole 412. Further, the refrigerant may flow from the guide hole 412 to the plurality of channels 224.

As shown in Figs. 8a to 9b, the guide 411 extending from the rear surface 402 of the busbar frame 400 may be formed toward the battery assembly 200 to form a slit-like guide hole 412 at the end.

Further, as shown in Fig. 9B, since the thickness D222 of the cooling plate is formed to be less than the width D412 of the guide hole 412, an end of the cooling plate may be inserted into the guide hole 412, such that the guide hole 412 may cover the end of the cooling plate 223. Furthermore, as shown in Fig. 9B, the shape of the guide 411 converges toward the battery assembly 200, such that refrigerant entering from the outside of the busbar frame 400 may be guided to flow efficiently into the plurality of channels 224 formed in the cooling plate.

Further, in one embodiment of the present disclosure, an accommodating space 230 may be formed by each of the first stack 210 and the second stack 220, the electrode tab 211a of each first cell 211 and the electrode tab 221a of each second cell 221, and the busbar frame 400, and a filler may be inserted into the accommodating space 230.

As shown in Figs. 9A and 9B, the accommodating space 230 may be formed in the form of a hollow space surrounded by the outer surface of the first stack 210 and the second stack 220, the electrode tab 211a of the first cell 211 and the electrode tab 221a of the second cell 221, and the rear surfaces 402 of the busbar frame 400. In addition, a filler including a material having heat resistance and/or flame retardance may be inserted into this hollow accommodating space 230.

For example, the electrode tab 211a of the first cell 211 and the electrode tab 221a of the second cell 221 may be formed to have a size smaller than the height of the first cell 211 and the second cell 221, so that the accommodating spaces 230 may be connected with neighboring accommodating spaces 230.

For example, the filler inserted into the accommodating space 230 may include a material with heat resistance and/or flame retardance. Thus, the phase of the filler may be liquid or solid, as long as the material satisfies the heat resistance and/or flame retardance.

Thus, heat transfer due to gas generated upon thermal propagation between the neighboring first cell 211 and second cell 221 may be minimized, and thermal propagation between the neighboring first cell 211 and second cell 221 may be delayed. Furthermore, during this delayed time, heat dissipation through the refrigerant flow to the aforementioned heat transfer member 222 may be performed to prevent thermal runaway of the neighboring first cell 211 and second cell 221.

On the other hand, the filler may be a composite material made of multiple materials rather than a single material. Some of the materials may satisfy heat resistance, while others may be provided for flame retardancy. The filler may not be mixed with multiple materials to be in a unified form, but be in a stacked form as multiple materials are separated.

For example, the filler may include a material that is injected in a liquid state and then cured in a solid state. For example, the material that is cured from a liquid state to a solid state may be an acrylic resin, an epoxy resin, an olefin resin, a urethane resin, an ethylene vinyl acetate (EVA) resin, or a silicone resin.

Therefore, after the electrode tab 211a of the first cell 211 and the electrode tab 221a of the second cell 221 are inserted into the busbar frame 400, the filler in a liquid state is injected and cured, such that the electrode tab 211a of the first cell 211 and the electrode tab 221a of the second cell 221 may be prevented from being deformed by an external charge or the like. On the other hand, the filler in a liquid state may also stay in the accommodating space 230 for a predetermined time due to its own viscosity, and thus it may likewise prevent deformation of the electrode tab 211a of the first cell 211 and the electrode tab 221a of the second cell 221.

For example, the filler inserted into the accommodating space 230 may be in solid form. In other words, the filler may be molded into a predetermined shape prior to being coupled to the battery assembly 200. For example, the filler may be provided in the form of foam. For example, to insert the filler in solid form, it is possible to locate a filler in every gap between the electrode tab 211a of the first cell 211 and the electrode tab 221a of the second cell 221 in the battery assembly 200 being assembled, and to couple the busbar frame 400 in a form covering up the located filler.

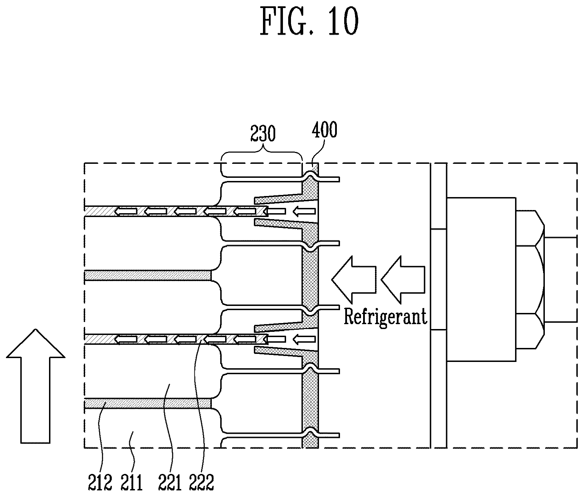

Fig. 10 is a schematic diagram schematically illustrating the movement of refrigerant and heat transfer in the battery module 1 according to one embodiment of the present disclosure.

As shown in Fig. 10, for example, heat transfer and flame transfer between the first cell 211 and the second cell 221 may be delayed by the thermal barrier member 212 upon thermal propagation TP in the direction of the arrow from the bottom of Fig. 10. Furthermore, heat transfer and flame transfer between accommodating spaces 230 where the electrode tab 211a of the first cell 211 and the electrode tab 221a of the second cell 221 are located may also be delayed by the filler inserted into the accommodating space 230.

Furthermore, as shown in Fig. 10, through the cooling plate 223 located in face contact with the first cell 211 and the second cell 221, the heat of the first cell 211 or the second cell 221 where thermal propagation took place may be transferred to the refrigerant flowing inside the channel 224 to be released to the outside.

Thus, the thermal propagation between the cells may be terminated as the heat energy generated by the cooling plate 223 is released to the outside through the cooling plate 223 while delaying the time of heat transfer through the thermal barrier member 212 and the filler upon thermal propagation.

Some of the aspects of the present disclosure are as follows:
Aspect 1: A battery module comprising: a housing having an interior space formed therein, and including an inlet through which refrigerant is introduced and an outlet through which refrigerant is discharged; a battery assembly accommodated in the housing; a busbar accommodated in the housing and electrically connected with electrode tabs of the battery assembly; and a busbar frame accommodated in the housing and having a surface on which the busbar is mounted.
Aspect 2: The battery module according to aspect 1, wherein the housing has a shape with an open top region, and further includes a top cover coupled to the housing and configured to cover the top region.
Aspect 3: The battery module according to aspect 2, wherein a sealing member is located between the housing and the top cover.
Aspect 4: The battery module according to preceding aspects, wherein the battery assembly includes: a plurality of first stacks, each including a first cell and a thermal barrier member stacked to the first cell in a first direction; a plurality of second stacks, each including a second cell and a heat transfer member stacked to the second cell in the first direction; and electrode tabs of the plurality of first cells and electrode tabs of the plurality of second cells electrically connected to the busbar.
Aspect 5: The battery module according to aspect 4, wherein the plurality of first stacks and the plurality of second stacks are arranged in sequence, with each first stack and each second stack alternating with each other.
Aspect 6: The battery module according to aspect 4, wherein the thermal barrier member includes one or more of fireproof foam, metal foam, ceramic wool, silica, or mica.
Aspect 7: The battery module according to aspect 4, wherein the heat transfer member is a cooling plate, each having refrigerant flowing therein and including a plurality of channels extending in a longitudinal direction of the second cell.
Aspect 8: The battery module according to aspect 7, wherein each of the plurality of channels is open at both ends of the cooling plate.
Aspect 9: The battery module according to preceding aspects, wherein the busbar frame includes at least one through-hole through which the electrode tab of the first cell and the electrode tab of the second cell pass to be connected to the busbar.
Aspect 10: The battery module according to anyone of aspects 1 to 7, wherein the busbar frame includes a refrigerant flow hole through which refrigerant flows toward the battery assembly.
Aspect 11: The battery module according to aspect 10, wherein the busbar frame further includes a plurality of guides extending from the refrigerant flow hole toward the battery assembly and converging toward the battery assembly.
Aspect 12: The battery module according to aspect 11, wherein ends of the plurality of guides form a guide hole.
Aspect 13: The battery module according to aspect 12, wherein a thickness of the cooling plate is less than a width of the guide hole, and an end of the cooling plate is inserted into the guide hole.
Aspect 14: The battery module according to aspect 12 or 13, wherein the refrigerant flows into a plurality of channels from the guide hole.
Aspect 15: The battery module according to anyone of aspects 5 to 14, further comprising: an accommodating space formed by each of the first stack and the second stack, the electrode tab of each first cell and the electrode tab of each second cell, and the busbar frame; and a filler inserted into the accommodating space.

The scope of the present disclosure is indicated by the following claims rather than by the detailed description above, and the meaning and scope of the claims and all modifications or variations derived from the equivalents thereof are to be construed as being within the scope of the present disclosure.

## Claims

1. A battery module comprising:
a housing having an interior space formed therein, and including an inlet through which refrigerant is introduced and an outlet through which refrigerant is discharged;
a battery assembly accommodated in the housing;
a busbar accommodated in the housing and electrically connected with electrode tabs of the battery assembly; and
a busbar frame accommodated in the housing and having a surface on which the busbar is mounted.

2. The battery module according to claim 1, wherein the housing has a shape with an open top region, and further includes a top cover coupled to the housing and configured to cover the top region.

3. The battery module according to claim 2, wherein a sealing member is located between the housing and the top cover.

4. The battery module according to preceding claims, wherein the battery assembly includes:
a plurality of first stacks, each including a first cell and a thermal barrier member stacked to the first cell in a first direction;
a plurality of second stacks, each including a second cell and a heat transfer member stacked to the second cell in the first direction; and
electrode tabs of the plurality of first cells and electrode tabs of the plurality of second cells electrically connected to the busbar.

5. The battery module according to claim 4, wherein the plurality of first stacks and the plurality of second stacks are arranged in sequence, with each first stack and each second stack alternating with each other.

6. The battery module according to claim 4, wherein the thermal barrier member includes one or more of fireproof foam, metal foam, ceramic wool, silica, or mica.

7. The battery module according to claim 4, wherein the heat transfer member is a cooling plate, each having refrigerant flowing therein and including a plurality of channels extending in a longitudinal direction of the second cell.

8. The battery module according to claim 7, wherein each of the plurality of channels is open at both ends of the cooling plate.

9. The battery module according to preceding claims, wherein the busbar frame includes at least one through-hole through which the electrode tab of the first cell and the electrode tab of the second cell pass to be connected to the busbar.

10. The battery module according to anyone of claims 1 to 7, wherein the busbar frame includes a refrigerant flow hole through which refrigerant flows toward the battery assembly.

11. The battery module according to claim 10, wherein the busbar frame further includes a plurality of guides extending from the refrigerant flow hole toward the battery assembly and converging toward the battery assembly.

12. The battery module according to claim 11, wherein ends of the plurality of guides form a guide hole.

13. The battery module according to claim 12, wherein a thickness of the cooling plate is less than a width of the guide hole, and an end of the cooling plate is inserted into the guide hole.

14. The battery module according to claim 12 or 13, wherein the refrigerant flows into a plurality of channels from the guide hole.

15. The battery module according to anyone of claims 5 to 14, further comprising:
an accommodating space formed by each of the first stack and the second stack, the electrode tab of each first cell and the electrode tab of each second cell, and the busbar frame; and
a filler inserted into the accommodating space.
